# EUROPEAN PATENT APPLICATION

(11) **EP 1 920 810 A2**
(43) Date of publication of application: **14.05.2008**
(21) Application number: 07254290.5
(22) Date of filing: 30.10.2007
(51) Int. Cl.: B01D 19/00

(54) **Acoustic degassing heat exchanger**

(30) Priority: 01.11.2006 US 590945
(71) Applicant: United Technologies Corporation, Hartford, CT 06101 (US)
(72) Inventor: Sabatino, Daniel R., East Hampton, Connecticut 06424 (US); Smith, Peter G., Wallingford, Connecticut 06492 (US); Chiappetta, Louis Jr., South Windsor, Connecticut 06074 (US); Lee, Jeremiah C., Coventry, Connecticut 06238 (US); Schlinker, Robert Hans, Canton, Connecticut 06019 (US)
(74) Representative: Leckey, David Herbert

(57) **Abstract**

A fuel delivery system (10) includes a fuel stabilization unit (26) that receives vibratory energy (30) for mixing fuel within fuel passages to improve the removal of dissolved oxygen from an oxygen containing fuel. A vibration generator (32) transmits vibratory energy (30) into the fuel stabilization unit (26) to induce mixing of fuel. Vibratory energy (30) is directed into the fuel to create enhanced mixing by inducing large-scale secondary flow motions that circulates fuel from a center flow area toward an oxygen permeable surface (52) to improve overall fuel deoxygenation as more of the fuel is placed in adjacent contact with the oxygen permeable membranes.

## Description

### BACKGROUND OF THE INVENTION

This invention generally relates to heat exchangers and mass separators. More particularly, this invention relates to a heat exchanger and fuel stabilization device within a fuel delivery system.

Conventional energy conversion devices utilize fuel to absorb heat generated by other systems. The heat from other systems is directed through a heat exchanger to reject heat into the fuel. The thermal capacity of the fuel is determined in large part by the resistance to the formation of autooxidative reactions. Autooxidative reactions generate insoluble materials know as "coke" or "coking" in hydrocarbon fuels containing dissolved oxygen at elevated temperatures, for example above 325°F (163°C).

It is known that removing dissolved oxygen from fuel increases the temperature at which the autooxidative reactions occur, thereby increasing the thermal capacity of the fuel. Devices for removing dissolved oxygen from fuel rely on relative proximity between a stream of fuel and a surface through which dissolved oxygen is drawn.

Disadvantageously, a fuel stream flowing through a passage in a deoxygenation device includes a center portion where fuel is not sufficiently close to an oxygen permeable surface for the desired removal of dissolved oxygen. Reducing the size of the passage can reduce the amount of fuel that is distant from the oxygen permeable surface. However such small passages can result in an undesirable pressure drop through the deoxygenation device. Further, mixing members within the fuel passages are known to induce secondary motion that causes more of the fuel stream to contact the oxygen permeable surfaces. However, such mixing members can also incur undesirable pressure loses as well as increasing overall costs.

Accordingly, it is desirable to design and develop a fuel stabilization unit that provides for the removal of dissolved oxygen, while maintaining desired fuel pressures.

### SUMMARY OF THE INVENTION

An example fuel delivery system includes a fuel conditioning unit that includes a fuel stabilization unit that receives vibratory energy for mixing fuel within fuel passages that improves the removal of dissolved oxygen from an oxygen containing fuel.

Fuel includes dissolved oxygen that is removed to improve thermal capacity. Fuel leaving the fuel stabilization unit includes little dissolved oxygen and can therefore be heated to temperatures not possible with the dissolved oxygen without generating coke forming autooxidative reactions. A vibration generator transmits vibratory energy into the fuel stabilization unit to induce mixing of fuel. The mixing of fuel improves overall fuel deoxygenation by enhancing oxygen transfer through an oxygen permeable surface. Further, mixing of fuel improves thermal energy transfer.

Accordingly, the example fuel stabilization unit receives directed vibratory energy to improve fuel mixing and thereby fuel deoxygenation efficiency.

### BRIEF DESCRIPTION OF THE DRAWINGS

Figure 1 is a schematic view an example fuel delivery system.
Figure 2 is a schematic view another example fuel delivery system.
Figure 3 is a schematic view of another example fuel delivery system.
Figure 4 is a schematic view of an example fuel passage of an example fuel delivery system.
Figure 5 is another schematic view of an example fuel passage of an example fuel delivery system.

These and other features of the present invention can be best understood from the following specification and drawings, the following of which is a brief description.

### DETAILED DESCRIPTION OF THE PREFERRED EMBODIMENT

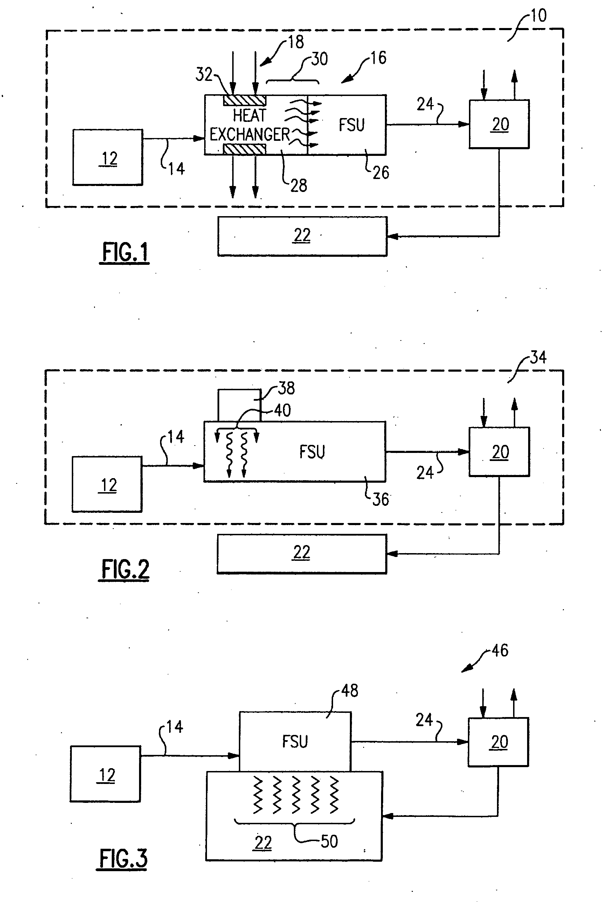

Referring to Figure 1, a fuel delivery system 10 includes a fuel conditioning unit 16. The fuel conditioning unit 16 includes a heat exchanger 28 and a fuel stabilization unit 26 for removing a portion of dissolved oxygen from fuel 14. Fuel 14 from a fuel storage unit 12 includes dissolved oxygen. Fuel 24 leaving the fuel conditioning unit 16 includes a reduced amount of dissolved oxygen. Therefore, fuel 24 can be heated to higher temperatures that would not have been possible without first removing dissolved oxygen. The fuel 24 flows through a second heat exchanger 20 that advantageously utilizes the increased thermal capacity. Fuel 24 is then routed to an energy conversion device 22.

The heat exchanger 28 is mechanically attached or integrally formed with the fuel stabilization unit 26 to transmit vibratory energy 30 into fuel within the fuel stabilization unit 26. The heat exchanger 28 receives a flow of fluid medium 18, along with the flow of fuel 14. The flow of fluid medium 18 generates vibrations 30 that are transmitted into the fuel flow 14 during passage through the fuel stabilization unit 26. The vibratory energy creates large-scale vertical or secondary flow structures in the fuel to aid in circulating fuel adjacent oxygen permeable surfaces.

The heat exchanger 28 includes vibration generators 32 that create the vibratory energy 30 that is transmitted into the fuel flowing through the fuel stabilization unit 26. The example vibration generators 32 respond to the flow of the fluid medium 18 to create the desired vibration energy 30 that is transmitted into the fuel flow 14. The example vibration generators 32 include fins or baffles that respond to the flow of the fuel stream 14 or the fluid medium, or both to create the desired vibration energy. Further, the vibration generators 32 may include other passive structures that utilize the flow of a fluid to produce the desired vertical flow structures that are sustained by the vibratory energy. The amount of vibration energy 30 that is created and transmitted to the fuel stabilization unit 26 is determined to provide the desired large-scale secondary flow characteristics that encourage fuel mixing and deoxygenation of the fuel.

Referring to Figure 2, another example fuel delivery system 34 includes a fuel stabilization unit 36 for removing dissolved oxygen from a fuel flow 14. Fuel entering the fuel stabilization unit 36 includes dissolved oxygen that is removed to improve the thermal capacity of the fuel. Fuel 24 exiting the fuel stabilization unit 36 includes a substantially reduced amount of dissolved oxygen. The removal of oxygen from fuel occurs during the flow of fuel adjacent an oxygen permeable surface. A vibration generator 38 creates vibratory and acoustic energy 40 that is transmitted into the fuel stabilization unit 36 to encourage mixing and turbulent flow to improve contact between the fuel 14 and the oxygen permeable surface within the fuel stabilization unit 36.

The vibration generator 38 is an actuated device that creates the desired vibration energy through positive actuation. The vibration generator 38 can include, for example, an electric motor or other electrically powered device. Further, other known actuators such as hydraulic and pneumatic devices can be utilized as the vibration generator 38 to create the desired vibration energy utilized to create the desired mixing of the fuel.

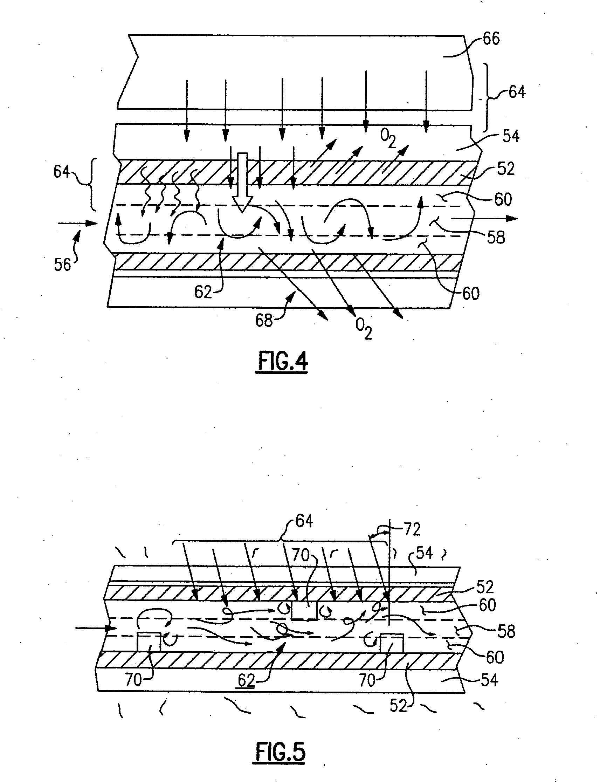

Referring to Figure 3, another example fuel delivery system 46 includes a fuel stabilization device 48 that is physically secured to receive vibratory energy 50 created by operation of the energy conversion device 22. The energy conversion device 22 converts the chemical energy stored within the fuel into desired work. The release of this energy is harnessed and the operation of device 22 generates vibrations that are utilized to aid mixing of fuel within the fuel stabilization unit 48 to improve removal of dissolved oxygen.

The energy conversion device 22 is illustrated schematically and can include, for example, a gas turbine engine, an internal combustion engine, or any other known engine. The vibration energy 50 is harnessed by a mechanical attachment between portions of the energy conversion device 22 or accompanying housing or covering that vibrates as a result of operation.

Referring to Figure 4 an example passage through the fuel stabilization unit includes an oxygen permeable membrane 52 that is supported on a porous substrate 54. An oxygen partial pressure differential across the permeable membrane 52 causes dissolved oxygen to migrate out of the fuel stream 56. The dissolved oxygen is then routed to another system or simply exhausted away from the fuel.

The fuel stream 56 includes a center flow area 58 bounded by adjacent flow areas 60. The adjacent flow areas 60 are adjacent the oxygen permeable membrane 52 such that oxygen is efficiently removed. The fuel within the center flow area 58 is distant from the permeable membrane 52 and therefore contains more dissolved oxygen than fuel in the adjacent flow areas 60. Vibratory energy 64 is directed into the fuel 56 in a direction transverse to fuel flow to create mixing by means of vibration induced secondary flow motions, schematically shown by arrows 62, that circulates fuel from the center flow area 58 into the adjacent flow areas 60.

The mixing of fuel between the center flow area 58 and the adjacent flow areas 60 improves overall fuel deoxygenation as more of the fuel is placed in adjacent contact with the oxygen permeable membranes 52.

Further, although the fuel 56 is mixed due to the vibratory induced turbulence, the fuel flow path is not restricted, providing little pressure drop for fuel flowing through the fuel stabilization unit.

Referring to Figure 5, another example fuel passage includes mixing members 70 that are spaced apart to induce further large scale fluid motion and mixing of the fuel. In this example, vibratory energy excites naturally occurring instabilities of the shear layers of the flow through and by the mixing members 70. The introduction of vibratory energy reduces the number of mixing members 70 required to provide the desired secondary flow and mixing of fuel into adjacent flows in contact with the permeable membranes. Further, the induced vibratory energy 64 provides for increased spacing between the reduced numbers of mixing members 70 without sacrificing the desired mixing effects that provide the desirable adjacent fuel flows.

The vibratory energy 64 is directed at an angle 72 relative to the flow of the fuel. The vibratory energy 64 can be introduced at any angle relative to the flow of fuel as is desired to produce the enhanced mixing of the fuel adjacent the fuel permeable membrane 52.

Accordingly, the example fuel stabilization unit receives directed vibratory energy to improve fuel mixing and thereby fuel deoxygenation efficiency without an accompanying drop in fuel pressure.

Although a several embodiments of this invention have been disclosed, a worker of ordinary skill in this art would recognize that certain modifications would come within the scope of this invention and that other embodiments are feasible. For that reason, the following claims should be studied to determine the true scope and content of this invention.

## Claims

1. A fuel stabilization unit (26; 36; 48) comprising:
an oxygen permeable surface (52) over which a fuel stream flows; and
a generator (32; 38; 22) introducing vibratory energy (30; 40; 50) for generating secondary flow motions in the fuel stream for enhancing oxygen transfer through the oxygen permeable surface (52).

2. The fuel stabilization unit as recited in claim 1, wherein the generator (32) is disposed to induce vibratory energy (30) into the flow of the fuel stream.

3. The fuel stabilization unit as recited in claim 1, wherein the generator (38) comprises an electrically actuated device.

4. The fuel stabilization unit as recited in claim 1, wherein the generator comprises a component of an energy conversion device (22) onto which the fuel stabilization unit (48) is mounted.

5. The fuel stabilization unit as recited in claim 1, wherein the generator comprises structures (32) that convert energy from the flow of the fuel stream into vibratory energy transmitted into the fuel stream.

6. The fuel stabilization unit as recited in any preceding claim, wherein the generator introduces vibratory energy for directing at least some of the fuel stream toward the oxygen permeable surface (52).

7. The fuel stabilization unit as recited in any preceding claim, wherein the generator introduces vibratory energy of a defined frequency into the fuel stream that is tailored to direct at least a portion of the fuel stream into the oxygen permeable surface (52).

8. The fuel stabilization unit as recited in any preceding claim, including a fluid medium other than the fuel stream that flows through the fuel stabilization unit (26) and exchanges thermal energy with the fuel stream.

9. The fuel stabilization unit as recited in any preceding claim, including an obstruction to the flow of the fuel stream for producing flow instabilities that are amplified by vibratory energy.

10. A heat exchanger assembly (28; 36; 48) comprising:
a first plurality of passages for a first fluid medium;
a second plurality of passages for a second fluid medium in thermal communication with the first plurality of passages; and
a generator (32) for imparting vibratory energy (30) into at least one of the first fluid medium and the second fluid medium.

11. The assembly as recited in claim 10, wherein the first plurality of passages includes an oxygen permeable surface (52) for removing dissolved oxygen from the first fluid medium.

12. The assembly as recited in claim 11, wherein the generator (32) comprises an electrically driven device.

13. The assembly as recited in claim 11, wherein the generator comprises a component of an energy conversion device (22) to which the heat exchanger device is mounted.

14. The assembly as recited in claim 10 or 11, wherein the generator comprises static structures (32) for converting flow of at least one of the first fluid medium and the second fluid medium into the vibratory energy (30).

15. The assembly as recited in any of claims 10 to 14, wherein the vibratory energy is imparted transverse to the direction of flow of one of the first fluid medium and the second fluid medium.

16. A method of removing oxygen from a fuel comprising the steps of:
a) flowing a fuel stream containing dissolved oxygen along an oxygen permeable membrane (52); and
b) generating a vibration through the fuel to direct a portion of the fuel stream against the oxygen permeable membrane (52).

17. The method as recited in claim 16; wherein said step b, comprises passively generating vibration energy from the fuel stream.

18. The method as recited in claim 16 or 17, wherein said step b, comprises actively generating vibration energy transverse to the oxygen permeable membrane (52).
